# EUROPÄISCHE PATENTSCHRIFT

(11) **EP 1 050 218 B1**
(45) Veröffentlichungstag und Bekanntmachung des Hinweises auf die Patenterteilung: **01.12.2004**
(21) Anmeldenummer: 00108889.7
(22) Anmeldetag: 27.04.2000
(51) Int. Cl.: A23G 7/00, A23G 3/22, B65G 23/06

(54) **Fördereinrichtung für Warenstücke**
Article transporting device
Dispositif pour transporter des articles

(30) Priorität: 03.05.1999 DE 19920068
(43) Veröffentlichungstag der Anmeldung: 08.11.2000
(73) Patentinhaber: Sollich KG, 32105 Bad Salzuflen (DE)
(72) Erfinder: Heyde, Hans, 49134 Wallenhorst (DE)
(74) Vertreter: Patentanwälte Rehberg + Hüppe

(56) Entgegenhaltungen:
- WO-A-98/37000
- DE-C- 3 839 440
- US-A- 4 865 183
- US-A- 5 816 988
- US-A- 6 086 495

## Beschreibung

Die Erfindung betrifft eine Fördereinrichtung für Warenstücke, insbesondere für mit Schokolademasse zu überziehende Süßwarenstücke, mit einem Gitterband aus Stabgeflecht, welches sich quer zur Förderrichtung erstreckende Stäbe aus geraden Stababschnitten und Maschen aufweist, wobei die Stäbe über die Maschen miteinander verbunden sind, einer mit Zahnrädern besetzten Antriebswelle, einer Umlenkachse und einem mit der Antriebswelle drehverbundenen Antriebsmotor, wobei die Zahnräder an den geraden Stababschnitten des Stabgeflechts angreifen. Solche Fördereinrichtungen werden insbesondere in Verbindung mit Überziehmaschinen eingesetzt, auf denen eine Schokolademasse oder eine andere kakaobutterhaltige oder ähnliche fettartige Masse auf die Oberfläche von Warenstücken, insbesondere Riegeln, aufgebracht wird. Wichtig ist, daß das wesentliche Element der Fördereinrichtung, nämlich das Gitterband, eine durchbrochene Fläche bildet, auf denen die Warenstücke aufliegend durch die Behandlungsmaschine gefördert werden. Das durchbrochene Gitterband ermöglicht es, daß Schokolade und andere Überzugsmassen von oben im freien Fall durch das Gitterband hindurchtreten, wieder aufgefangen und erneut im Kreislauf gefördert werden können. Solche Fördereinrichtungen mit einem Gitterband werden auch an anderen Behandlungsmaschinen für Warenstücke, insbesondere Nahrungsmittelstücke, eingesetzt, beispielsweise beim Backen von Keksen. Auch hier gestattet es das durchbrochene Gitterband, daß ein Medium, beispielsweise warme Luft, durch das Gitterband hindurchtritt und die Warenstücke gleichsam allseitig umspült.

Die DE 38 39 440 C1 zeigt eine Schokolade-Überziehmaschine mit einer ein Gitterband aufweisenden Fördereinrichtung. Das endlose Gitterband ist um eine Antriebswelle und um eine oder mehrere Umlenkachsen geführt. Die Antriebsachse ist mit Zahnrädern besetzt, die mit ihren Zähnen in das Gitterband eingreifen und dieses damit in Förderrichtung mitnehmen.

Es sind Gitterbänder aus Stahlgeflecht bekannt (siehe z.B. WO-98/37000) . Das Stahlgeflecht besteht aus einer Vielzahl von Stäben, die sich im wesentlichen quer zur Förderrichtung des Gitterbandes erstrecken. Jeder einzelne Stab ist mehrfach Z-förmig abgewinkelt verformt. Für das Stabgeflecht bzw. die Stäbe wird in der Regel Draht mit kreisrundem Querschnitt eingesetzt. Ein solcher Stab weist bzw. bildet eine Vielzahl gerader Stababschnitte, die sich quer zur Förderrichtung erstrecken. Darüber hinaus sind U-förmig verformte Maschen vorgesehen, die sich mit ihren Schenkeln leicht schrägstehend etwa in Förderrichtung erstrecken. Die einzelnen benachbarten Stäbe sind dabei so ineinander eingehängt, daß das endlose Gitterband entsteht. Es genügt in der Regel, wenn nur eine Antriebswelle vorgesehen ist. Meist geschieht dies in Kommunikation mit mehreren Umlenkachsen, die auch mit Umlenkrädern besetzt sein können. Es ist ein Antriebsmotor vorgesehen, der mit der Antriebswelle drehverbunden ist. Es kann auch ein Getriebe zwischen diese Elemente geschaltet sein. Die Zahnräder sind auf der Antriebswelle so angeordnet, daß sie lediglich an den geraden Stababschnitten des Stabgeflechtes angreifen und das für die Bewegung des Gitterbandes in Förderrichtung erforderliche Drehmoment übertragen. Die Schenkel der Maschen erstrecken sich in gewissem Abstand seitlich von den Zahnrädern. Die Zahnräder greifen in der Regel an den ziehenden Stababschnitten des Gitterbandes an. Die Lebensdauer eines solchen Gitterbandes aus Stahlgeflecht ist begrenzt. Das Gitterband bzw. die einzelnen Stäbe des Stabgeflechtes werden beim Betrieb der Fördereinrichtung einer Biegebelastung unterworfen. Bedingt durch die Kraftübertragung im seitlichen Randbereich der Zahnräder unterliegen die Stäbe örtlich einer wechselnden Biegebeanspruchung. Die Stäbe werden während des Betriebes immer wieder an den gleichen Stellen gebogen, also beund wieder entlastet. Insoweit besteht die Gefahr von Ermüdungsbrüchen. Solche Gitterbandbrüche ziehen es nach sich, daß die Produktion unterbrochen werden muß, bis das Gitterband ausgetauscht ist oder eine Reparatur des Gitterbandes an Ort und Stelle erfolgt ist. Die durch die notwendige Produktionsunterbrechung verursachten Verluste können erheblich sein.

Es ist auch bereits bekannt, die Zahnräder mittig mit einer tiefen umlaufenden Nut auszustatten, um der Gefahr eines Fremdkörperaufbaus in den Vertiefungen zwischen den Zähnen in der Mitte der Zahnräder entgegenzuwirken. Auch hierbei sind die Zahnräder schmaler ausgebildet als die Breite der geraden Stababschnitte des Stahlgeflechts, sodaß die sich in Förderrichtung erstreckenden Schenkel der Maschen einen Abstand zu den Stirnflächen der Zahnräder aufweisen. Die Anordnung einer Nut verringert in keiner Weise die Gefahr von Ermüdungsbrüchen.

Der Erfindung liegt die Aufgabe zugrunde, eine Fördereinrichtung der eingangs beschriebenen Art bereitzustellen, die eine vergleichsweise längere Betriebszeit ermöglicht und bei der die Anfälligkeit gegen Gitterbandbrüche reduziert ist.

Erfindungsgemäß wird dies bei einer Fördereinrichtung der eingangs beschriebenen Art dadurch erreicht, daß die Zahnräder der Antriebswelle quer zur Förderrichtung im Bereich der Maschen scheibenartige Verbreiterungen aufweisen, und daß die Maschen auf den scheibenartigen Verbreiterungen abgestützt sind.

Die Erfindung geht von dem Gedanken aus, nicht nur die geraden Stababschnitte, sondern auch die Maschen zwischen den geraden Stababschnitten im Bereich der Zahnräder abzustützen. In dem angesprochenen Bereich wird die Einpunktabstützung durch eine Zweipunktabstützung ersetzt. Die sich quer zur Förderrichtung gerade erstreckenden Stababschnitte werden im äußeren Bereich, also nahe an den Maschen, durch die Zahnräder abgestützt. Zusätzlich zu den Zahnrädern oder auch einstückig mit diesen sind scheiben- oder zylinderartige Verbreiterungen, Fortsätze, Verdickungen o. dgl. vorgesehen, die in axialer Richtung der Antriebswelle in die Bereiche einragen, in denen sich die Maschen befinden. Damit wird auch die Masche abgestützt. Die beiden Abstützpunkte liegen relativ nahe beieinander, aber andererseits dennoch auf Abstand auseinander, so daß die Biegewechselbeanspruchung auf den Stab erheblich reduziert ist. Hieraus resultiert eine vorteilhaft erhöhte Lebensdauer und eine nutzbare Betriebszeit der Fördereinrichtung bzw. des Gitterbandes. Damit wird zu beiden Seiten eines Zahnrades bzw. eines geraden Stababschnittes je eine Doppelabstützung geschaffen, die den einen U-förmigen Schenkel einer Masche zwischen sich einschließt. Damit wird zugleich auch die Durchbiegung der geraden Stababschnitte wesentlich verringert. Dies führt dazu, daß die Stababschnitte an den Zähnen der Zahnräder besser und auf größerer Fläche anliegen, so daß auch der Reibverschleiß im Vergleich zu Fördereinrichtungen mit bekanntem Gitterbandantrieb entsprechend reduziert ist.

Die scheibenartigen Verbreiterungen können auf beiden Seiten eines Zahnrades vorgesehen sein. Bei dieser Ausführungsform ist die axiale Länge des Zahnrades bzw. eines Zahnradkörpers der Länge eines geraden Stababschnittes so angepaßt, daß der gerade Stababschnitt von den seitlichen Randbereichen des Zahnrades oder des Zahnradkörpers unter möglichst breiter Abstützung ergriffen wird. Bezüglich eines solchen Zahnrades oder eines Zahnradkörpers sind die scheibenartigen Verbreiterungen, Zylinderansätze o. dgl. auf beiden Seiten des Zahnrades vorgesehen, d. h. es wird an beiden Enden eines geraden Stababschnittes die dort befindliche jeweilige Masche mit abgestützt. Es versteht sich, daß die Zahnräder in der Regel in die ziehenden Stababschnitte der Stäbe eingreifen, während die gezogenen Stababschnitte frei von einem Eingriff bleiben. Über die Arbeitsbreite des Gitterbandes ist eine entsprechende Mehrzahl von Zahnrädern und geraden ziehenden Stababschnitten vorgesehen. Ein solches Zahnrad oder ein entsprechender Zahnradkörper kann in seinem Mittelbereich eine im Durchmesser reduzierte umlaufende Nut aufweisen. Im Mittelbereich eines geraden Stababschnittes wird ohnehin keine Antriebskraft übertragen, so daß durch die Anordnung der umlaufenden Nut das Gewicht der Zahnräder bzw. Zahnradkörper verringert wird.

Eine weitere Ausführungsform sieht vor, daß die scheibenartige Verbreiterung nur auf einer Seite eines Zahnrades vorgesehen ist. Ein solches Zahnrad greift damit nur in dem einen Endbereich eines geraden Stababschnittes an, während die zugehörige Verbreiterung die anschließende Masche abstützt. Im Bereich des gleichen geraden Stababschnittes kann in spiegelsymmetrischer Anordnung ein weiteres Zahnrad mit Verbreiterung vorgesehen sein. Bei allen Ausführungsformen kann die scheibenartige Verbreiterung einen Außendurchmesser aufweisen, der kleiner oder gleich dem Fußkreisdurchmesser des Zahnrades ist. Die Durchmessergestaltung der Verbreiterung richtet sich nach der Formgebung der Stäbe des Gitterbandes, insbesondere der geometrischen Gestalt der Masche zwischen den geraden Stababschnitten. Davon hängt es auch ab, ob die gezogenen geraden Stababschnitte des vorangehenden Stabes mit den ziehenden geraden Stababschnitten des nachfolgenden Stabes fluchten oder nicht. In der Regel ist hier ein geringfügiger Versatz vorgesehen, der dem Drahtdurchmesser entspricht.

Besonders vorteilhaft ist es, wenn für den Bereich eines geraden Stababschnittes mit seinen beiden Maschen zwei Zahnräder mit je einer einseitigen Verbreiterung vorgesehen sind. In Verbindung damit können die beiden Zahnräder relativ zueinander quer zur Förderrichtung ver- und einstellbar ausgebildet sein. Diese Ausführungsform hat den Vorteil, daß die Zahnräder relativ zu der Anordnung der Maschen an den geraden Stababschnitten einstellbar sind. Damit wird es möglich, möglichst weit am Ende der geraden Stababschnitte anzugreifen oder, anders gesagt, einen geringen Abstand zu den Maschen sicherzustellen. Auf diese Art und Weise lassen sich auch Toleranzen, die beim Biegen der Stäbe des Gitterbandes auftreten, ausgleichen.

Die scheibenartigen Verbreiterungen an den Zahnrädern sind in der Regel zylindrisch ausgebildet, d. h. sie besitzen eine glatte zylindrische Oberfläche. Eine andere Möglichkeit besteht darin, daß die Verbreiterung zur Abstützung der Maschen auf ihrem Umfang Vertiefungen aufweist. Diese Vertiefungen sind entsprechend der Teilung der Stäbe des Gitterbandes auf dem Umfang angeordnet und an den Drahtdurchmesser der Stäbe angepaßt, so daß die Maschen örtlich in einer Vertiefung abgestützt werden.

Die Erfindung wird anhand verschiedener Ausführungsbeispiele weiter erläutert und beschrieben. Es zeigen:
- Fig. 1: eine schematisierte Seitenansicht der Führung eines Gitterbandes,
- Fig. 2: eine Draufsicht auf die Antriebswelle mit dem Gitterband gemäß der Linie II-II in Fig. 1,
- Fig. 3: eine Seitenansicht eines Zahnrades gemäß der in Figur 2 dargestellten Ausführungsform,
- Fig. 4: eine Draufsicht auf das Zahnrad gemäß Fig. 3,
- Fig. 5: eine ähnliche Darstellung wie Fig. 2, jedoch bei einer zweiten Ausführungsform der Antriebswelle,
- Fig. 6: eine in die Ebene abgewickelte Darstellung zur Verdeutlichung des Eingriffes der Zähne und der Abstützung der Maschen,
- Fig. 7: eine Seitenansicht eines Zahnrades mit der Relativlage der Elemente des Gitterbandes, und
- Fig. 8: eine weitere Darstellung, ähnlich Fig. 7, bei einer weiteren Ausführungsform.

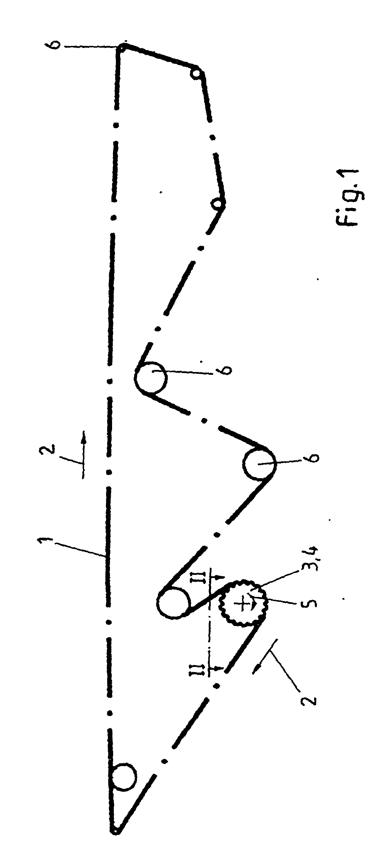

In Fig. 1 ist in strichpunktierter Linie ein Gitterband 1 schematisch verdeutlicht, welches in Förderrichtung 2 von einer Antriebswelle 3 bewegt wird. Die Antriebswelle 3 ist mit Zahnrädern 4 besetzt und wird gemäß Pfeil 5 angetrieben. Das Gitterband 1 ist in bekannter Weise als endloses Band ausgebildet und wird über eine Reihe von Umlenkachsen 6, die auch vorzugsweise teilweise als Messerausführungen ausgebildet sein können, umgelenkt. Es versteht sich, daß die von dem Gitterband 1 zu transportierenden Warenstücke nur auf dem oberen Turm des Gitterbandes 1 aufliegend beispielsweise durch eine Überziehmaschine geführt werden.

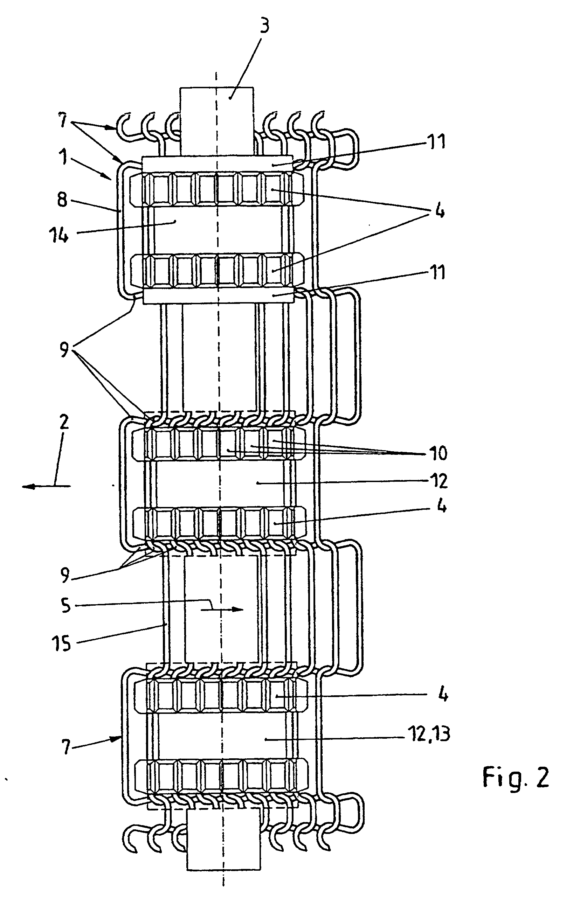

Fig. 2 zeigt eine Draufsicht von oben gemäß der Pfeilangabe II-II in Fig. 1. Es ist also nur ein Teil des Gitterbandes 1 unterhalb der Antriebswelle 3 mit ihren Zahnrädern 4 dargestellt. Dies gilt zumindest für den oberen Teil der Darstellung der Fig. 2. Man erkennt, daß die Antriebswelle 3 in Richtung gemäß Pfeil 5 angetrieben wird und dadurch das unterhalb der Antriebswelle 3 befindliche Gitterband 1 eine Bewegung in Förderrichtung 2 ausführt.

Das Gitterband 1 besteht aus einem Stabgeflecht. Jeder Stab 7 weist entsprechend der Arbeitsbreite gerade Stababschnitte 8 und Maschen 9 auf. Als Stababschnitte 8 werden die Teile des Stabes 7 bezeichnet, die sich etwa gerade in Richtung der Achse der Antriebswelle 3 erstrecken und die mit den Zahnrädern 4 in Kontakt gelangen. Dabei übertragen die Zahnräder 4 mit Ihren Zähnen 10 die entsprechenden Kräfte auf das Gitterband 1. Als Maschen 9 werden die Teile der Stäbe 7 bezeichnet, die sich im wesentlichen an die geraden Stababschnitte 8 anschließen und sich etwa senkrecht oder leicht geneigt zu der Achse der Antriebswelle 3 erstrecken. Diese Maschen 9 dienen darüberhinaus der Verbindung bzw. Verflechtung benachbarter Stäbe 7. Darüberhinaus weist jeder Stab 7 noch eine entsprechende Anzahl zurückversetzt liegender gerader Stababschnitte 15 auf, die aber an der Kraftübertragung nicht teilnehmen und für die vorliegende Erfindung damit von untergeordneter Bedeutung sind.

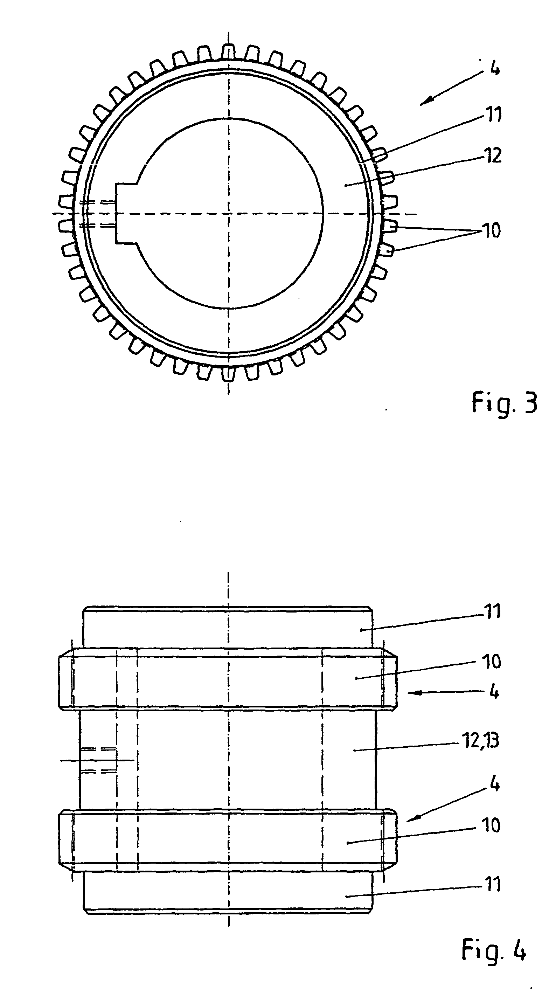

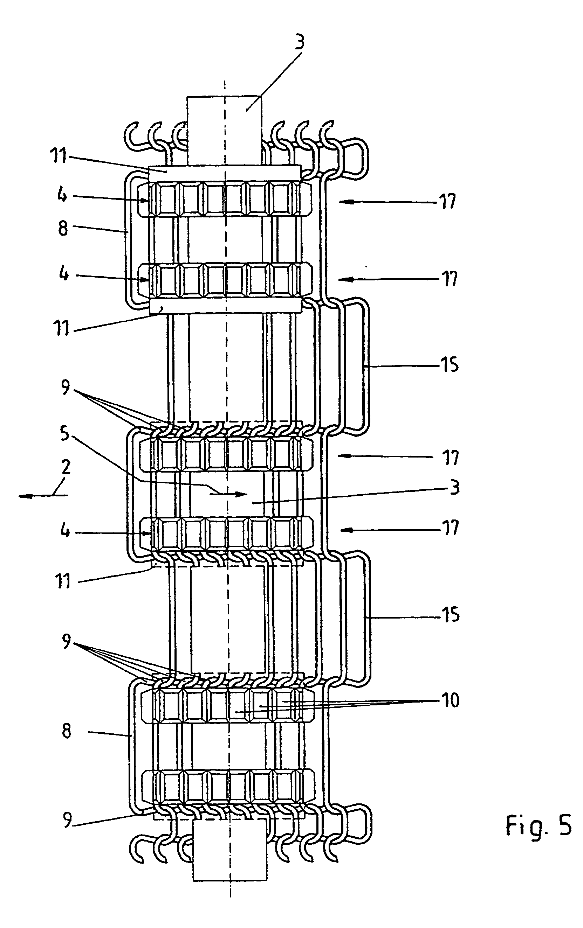

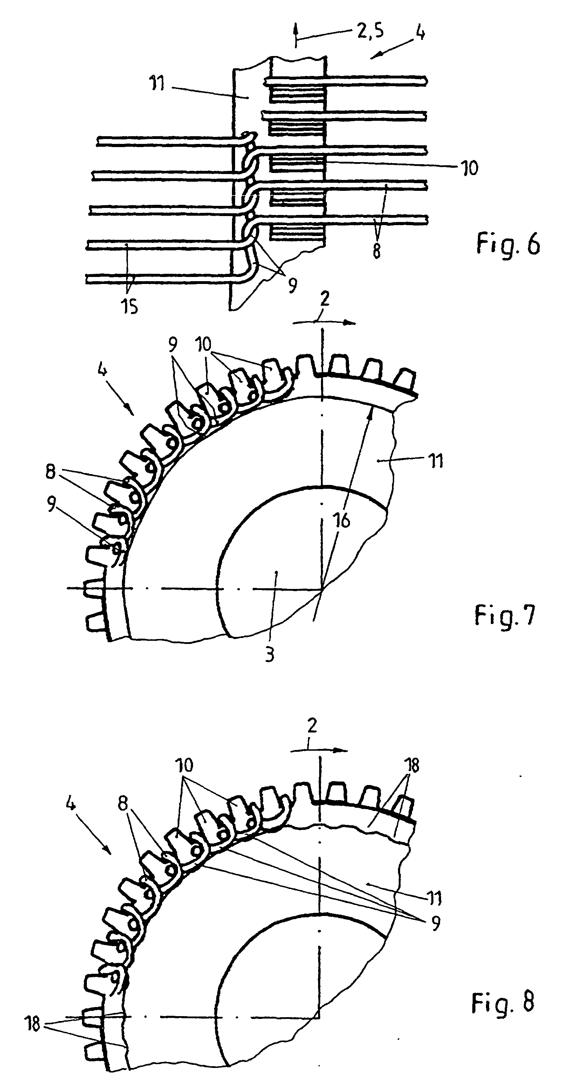

Wesentlich ist, daß die Zahnräder 4 mit scheibenartigen Verbreiterungen 11 versehen sind. Die Verbreiterungen 11 sind dort angeordnet, wo sich am Gitterband 1 die Maschen 9 befinden. Die Verbreiterungen 11 dienen zur kraftmäßigen Abstützung der Maschen 9. Um den Verlauf der Maschen 9 und das Ineinandergreifen benachbarter Stäbe 7 des Gitterbandes 1 zu verdeutlichen sind die Verschlingungen der Maschen 9 benachbarter Stäbe im unteren Bereich der Figur 2 dargestellt. Die Verbreiterungen 11 an dieser Stelle sind nur durch eine strichpunktierte Linie angedeutet. Damit sind die Verbreiterungen 11 an dieser Stelle gleichsam herausgebrochen und man sieht auf die miteinander verschlungenen Maschen 9 des Gitterbandes 1 unterhalb der Antriebswelle 1. Es ist erkennbar, wie im Bereich eines stabförmigen geraden Stababschnittes 8 jeweils ein Grundkörper 12 auf der Antriebswelle 3 aufgesetzt und drehfest mit dieser verbunden ist. Jeder Grundkörper 12 trägt zwei Zahnräder 4, die so an dem Grundkörper ausgebildet sind, daß die Zahnräder 4 den Mittelbereich eines Stababschnittes 8 auslassen und in den Endbereichen des Stababschnittes 8, nahe zu den Maschen 9, zu einem Wirkangriff gelangen. Es geht also darum, die Kräfte möglichst außen an den Stababschnitten 8 zu übertragen, also in einem Bereich angrenzend an die Maschen 9. Dies zielt darauf ab, die Stäbe 7 einer möglichst geringen Biegewechselbeanspruchung auszusetzen. Zu diesem Zweck ist der Mittelbereich 13 der Zahnräder 4 mit vergleichsweise verringertem Durchmesser bzw. einer umlaufenden Nut 14 versehen. Die Verbreiterungen 11 weisen einen Außendurchmesser 16 auf, der geringfügig kleiner als der Fußkreisdurchmesser der Verzahnung der Zahnräder 4 bzw. der Zähne 10 ausgebildet ist. Fig. 7 läßt erkennen, daß die einzelnen Maschen 9 auf den Verbreiterungen 11 abgestützt sind, so daß die Umfangskraft über die Zahnräder 4 zwar ausschließlich oder im wesentlichen über die Zähne 10 auf die geraden Stababschnitte 8 übertragen wird. Durch die Abstützung der Maschen 9 auf der Umfangsfläche der Verbreiterungen 11 und die dabei einwirkende Reibung zwischen den Teilen wird jedoch die Biegewechselbeanspruchung des Gitterbandes 1 an diesen Stellen erheblich reduziert, was sich in einer gesteigerten Gebrauchsdauer äußert. In den Fig. 3 und 4 ist eine erste Ausführungsform der Zahnräder 4 mit den Verbreiterungen 11 dargestellt. An einem gemeinsamen Grundkörper 12 sind zwei Zahnräder 4 verwirklicht. Nach außen gerichtet schließt jeweils eine Verbreiterung 11 an.

Fig. 5 zeigt eine ähnliche Darstellung wie Fig. 2, jedoch bei einem zweiten Ausführungsbeispiel. Hier sind jeweils einzelne Einheiten 17 verwirklicht, die jeweils getrennt voneinander auf die Antriebswelle 3 aufgesetzt und mit dieser drehverbunden sind. Jede Einheit 17 besteht aus einem Zahnrad 4 mit einseitig anschließender Verbreiterung 11.

Fig. 6 zeigt den Eingriff der Zähne 10 an den geraden Stababschnitten 8 und die Abstützung der Maschen 11 auf den Verbreiterungen, und zwar in einer Draufsicht, in die Zeichenebene abgewickelt.

Die Fig. 7 und 8 zeigen Seitenansichten eines Zahnrades 4 mit den Zähnen 10 in Draufsicht auf die die Verbreiterung 11 aufweisende Stirnseite. Die Zahnräder 4 werden gemäß Förderrichtung 2 angetrieben und übertragen ihre Kräfte dabei auf das Gitterband 1 bzw. die Stababschnitte 8. Es ist deutlich erkennbar, wie sich die Maschen 9 auf dem Umfang der Verbreiterung 11 mit dem Außendurchmesser 16 abstützen. Um nicht nur die Haftreibung für diese Abstützung auszunutzen, wie dies in Fig. 7 dargestellt ist, kann die Umfangsfläche der Verbreiterung 11 mit Vertiefungen 18 (Fig. 8) versehen sein, in die die Maschen 9 formschlüssig eingreifen. Die Vertiefungen 18 sind längsnutartig ausgebildet und stellen damit ebenfalls eine Art Verzahnung dar.

### BEZUGSZEICHENLISTE

- 1 -: Gitterband
- 2 -: Förderrichtung
- 3 -: Antriebswelle
- 4 -: Zahnrad
- 5 -: Pfeil
- 6 -: Umlenkachse
- 7 -: Stab
- 8 -: Stabsbschnitt
- 9 -: Masche
- 10 -: Zahn
- 11 -: Verbreiterung
- 12 -: Grundkörper
- 13 -: Mittelbereich
- 14 -: Nut
- 15 -: Stababschnitte
- 16 -: Außendurchmesser
- 17 -: Einheit
- 18 -: Vertiefung

## Patentansprüche

1. Fördereinrichtung für Warenstücke, insbesondere für mit Schokolademasse zu überziehende Süßwarenstücke, mit einem Gitterband (1) aus Stabgeflecht, welches sich quer zur Förderrichtung (2) erstreckende Stäbe (7) aus geraden Stababschnitten (8) und Maschen (9) aufweist, wobei die Stäbe (7) über die Maschen (9) miteinander verbunden sind, einer mit Zahnrädern (4) besetzten Antriebswelle (3), einer Umlenkachse (6) und einem mit der Antriebswelle (3) drehverbundenen Antriebsmotor, wobei die Zahnräder (4) an den geraden Stababschnitten (8) des Stabgeflechts angreifen, **dadurch gekennzeichnet, daß** die Zahnräder (4) der Antriebswelle (3) quer zur Förderrichtung (2) im Bereich der Maschen (9) scheibenartige Verbreiterungen (11) aufweisen, und daß die Maschen (9) auf den scheibenartigen Verbreiterungen (11) abgestützt sind.

2. Fördereinrichtung nach Anspruch 1, **dadurch gekennzeichnet, daß** die scheibenartigen Verbreiterungen (11) auf beiden Seiten eines Zahnrades (12, 4) vorgesehen sind.

3. Fördereinrichtung nach Anspruch 2, **dadurch gekennzeichnet, daß** das Zahnrad (12, 4) in seinem Mittelbereich (13) eine im Durchmesser reduzierte umlaufende Nut (14) aufweist.

4. Fördereinrichtung nach Anspruch 1, **dadurch gekennzeichnet, daß** die scheibenartige Verbreiterung (11) nur auf einer Seite eines Zahnrades (4) vorgesehen ist.

5. Fördereinrichtung nach Anspruch 1, **dadurch gekennzeichnet, daß** die scheibenartige Verbreiterung (11) einen Außendurchmesser (16) aufweist, der kleiner oder gleich dem Fußkreisdurchmesser des Zahnrades (4) ist.

6. Fördereinrichtung nach Anspruch 1, 4 oder 5, **dadurch gekennzeichnet, daß** für den Bereich eines geraden Stababschnittes (8) mit seinen beiden Maschen (9) zwei Zahnräder (4) mit je einer einseitigen Verbreiterung (11) vorgesehen sind, und daß die beiden Zahnräder (4) relativ zueinander quer zur Förderrichtung (2) ver- und einstellbar ausgebildet sind.

7. Fördereinrichtung nach einem der Ansprüche 1 bis 6, **dadurch gekennzeichnet, daß** die Verbreiterung (11) zur Abstützung der Maschen (9) auf ihrem Umfang Vertiefungen (18) aufweist.

## Claims

1. An apparatus for conveying articles, especially confectionery articles to be covered with chocolate mass, comprising a grid belt (1) of a web of bars including a plurality of bars (7) extending in a substantially transverse direction with respect to a conveying direction (2) of the articles, the bars including straight bar portions (8) and meshes (9) interconnecting the straight bars (7), a drive shaft (3) including gear wheels (4), a deflecting axis (6) and a motor being operatively connected to the drive shaft (3), the gear wheels (4) contacting the straight bar portions (8) of the web of bars, **characterized in that** the gear wheels (4) of the drive shaft (3) include disk-like enlargements (11) being located in a substantially transverse direction with respect to the conveying direction (2), and **in that** the disk-like enlargements (11) are designed and arranged to support the meshes (9).

2. Apparatus of claim 1, **characterized in that** the disk-like enlargements (11) are arranged on both sides of one gear wheel (12, 4).

3. Apparatus of claim 2, **characterized in that** the gear wheel (12, 4) in its middle region (13) includes a channel (14) reducing its diameter.

4. Apparatus of claim 1, **characterized in that** the disk-like enlargement (11) is only arranged at one side of the gear wheel (4).

5. Apparatus of claim 1, **characterized in that** the disk-like enlargement (11) has an outer diameter (16) being less than or identical to a root diameter of the gear wheel (4).

6. Apparatus of claim 1, 4 or 5, **characterized in that** two gear wheels (4) each including one enlargement (11) being arranged only at one side are provided in the region of the straight bar portion (8) and both of its meshes (9), and **in that** one of the two gear wheels (4) is designed and arranged to be adjustable with respect to the other gear wheel in a direction transverse to the conveying direction (2).

7. Apparatus of one of the claims 1 to 6, **characterized in that** the enlargement (11) at its circumference includes impressions (18) being designed and arranged to support the meshes (9).

## Revendications

1. Dispositif de transport de produits, en particulier de produits de confiserie à recouvrir d'une pâte de chocolat, comportant une bande en grille (1) faite d'un treillis de barres, qui comporte des barres (7) s'étendant transversalement à la direction de transport (2) constituées de tronçons de barre (8) droits et de mailles (9), les barres (7) étant reliées entre elles par les mailles (9), comportant un arbre d'entraînement (3) équipé de roues dentées (4), un axe de renvoi (6) et un moteur d'entraînement relié en rotation à l'arbre d'entraînement (3), les roues dentées (4) agissant sur les tronçons de barre (8) droits du treillis de barres, **caractérisé en ce que** les roues dentées (4) de l'arbre d'entraînement (3) présentent, transversalement à la direction de transport (2), dans la zone des mailles (9), des élargissements (11) de type disque, et **en ce que** les mailles (9) sont soutenues sur les élargissements (11) de type disque.

2. Dispositif de transport selon la revendication 1, **caractérisé en ce que** les élargissements (11) de type disque sont prévus sur les deux côtés d'une roue dentée (12, 4).

3. Dispositif de transport selon la revendication 2, **caractérisé en ce que** la roue dentée (12, 4) présente, dans sa zone centrale (13), une rainure (14) périphérique de diamètre réduit.

4. Dispositif de transport selon la revendication 1, **caractérisé en ce que** l'élargissement (11) de type disque n'est prévu que sur un côté d'une roue dentée (4).

5. Dispositif de transport selon la revendication 1, **caractérisé en ce que** l'élargissement (11) de type disque présente un diamètre extérieur (16) qui est inférieur ou égal au diamètre du cercle de pied de la roue dentée (4).

6. Dispositif de transport selon la revendication 1, 4 ou 5, **caractérisé en ce que** pour la zone d'un tronçon de barre (8) droit avec ses deux mailles (9) sont prévues deux roues dentées (4) avec chacune un élargissement (11) unilatéral, et **en ce que** les deux roues dentées (4) sont réalisées déplaçables et réglables l'une par rapport à l'autre transversalement à la direction de transport (2).

7. Dispositif de transport selon l'une des revendications 1 à 6, **caractérisé en ce que** l'élargissement (11) présente des renfoncements (18) pour soutenir les mailles (9) sur leur pourtour.
